**Europäisches Patentamt**

**European Patent Office**

**Office européen des brevets**

(19)

(11) Veröffentlichungsnummer : **0 384 249 B1**

# (12) EUROPÄISCHE PATENTSCHRIFT

(45) Veröffentlichungstag der Patentschrift :
**22.04.92 Patentblatt 92/17**

(21) Anmeldenummer : **90102641.9**

(22) Anmeldetag : **10.02.90**

(51) Int. Cl.⁵ : **B01J 2/28,** C08K 9/08, C08J 3/22

(54) **Verwendung von Polyisocyanat-Polyadditionsprodukten zur Regulierung der Korngrösse organischer Materialien.**

(30) Priorität : **23.02.89 DE 3905555**

(43) Veröffentlichungstag der Anmeldung :
**29.08.90 Patentblatt 90/35**

(45) Bekanntmachung des Hinweises auf die Patenterteilung :
**22.04.92 Patentblatt 92/17**

(84) Benannte Vertragsstaaten :
**BE DE FR GB IT NL**

(56) Entgegenhaltungen :
**EP-A- 0 008 083**
**FR-A- 2 100 304**
**US-A- 4 569 834**

(73) Patentinhaber : **BAYER AG**
**W-5090 Leverkusen 1 Bayerwerk (DE)**

(72) Erfinder : **Unterberg, Heinz, Dr.**
**Goethestrasse 71**
**W-4047 Dormagen (DE)**
Erfinder : **Hilken, Günter, Dr.**
**Hirschweg 83**
**W-5068 Odenthal (DE)**
Erfinder : **Walzel, Peter, Dr.**
**Von-Ketteler-Strasse 4**
**W-4047 Dormagen (DE)**
Erfinder : **Schlesman, Harro, Dr.**
**Eifgenstrasse 24**
**W-5068 Odenthal 3 (DE)**

## Beschreibung

Die Erfindung betrifft die Verwendung von neutralisierte Säuregruppen enthaltenden Polyisocyanat-Polyadditionsprodukten zur Regulierung der Teilchengrößen körniger organischer Materialien, d.h. zur Herstellung von Körnern gewünschter Größe, z.B. in Granulat- oder Pillenform. Dabei dienen die Polyadditionsprodukte als Bindemittel in wäßrigen Zübereitungen (d.h. in wäßrigen Lösungen oder Dispersionen); diese wäßrigen Zubereitungen werden mit den - als Pulver vorliegenden - organischen Materialien vermischt. Durch Trocknung erhält man ein körniges Material, das sich unter weitgehender Vermeidung von Staub, wie er üblicherweise während der Handhabung körnigen Materials immer wieder neu entsteht, verarbeiten läßt. Besonders hilfreich ist die Erfindung für Hilfsmittel und Zusatzstoffe, deren Verwendung eine Verteilung in Polymeren, z.B. in Thermoplasten oder Kautschuken, erforderlich macht.

Die meisten organischen Chemikalien werden im pulverförmigen Zustand verarbeitet, wobei die Mehrzahl der Teilchen eine Größe unter 500 µm besitzt. Pulverförmige Materialien neigen aber bei üblicher Handhabung zur Verstaubung; die entstehenden Stäube sind aus hygienischen und arbeitssicherheitstechnischen Gründen unerwünscht.

Aus diesem Grund werden manche organische Verbindungen in körniger Form, z.B. als Granulat oder Pillen, geliefert. Von körnigen Produkten erwartet man, daß sie in Bezug auf chemische Eigenschaften, Stabilität (Alterungsverhalten) und Verteilbarkeit den pulverförmigen Produkten gleichen oder zumindest stark ähneln. Insbesondere der Wunsch, auch den Staubanteil von körnigen Materialien weiter zu reduzieren und dennoch ihre Verteilbarkeit in einem (oft polymeren) Medium nicht zu verschlechtern, führt oft zu einem Dilemma, das nicht ohne Kompromiß zu lösen ist.

Es wurde nun gefunden, daß wäßrige Zubereitungen von neutralisierte Säuregruppen enthaltenden Polyisocyanat-Polyadditionsprodukten hervorragend zur Regulierung der Korngröße von organischen Materialien geeignet sind: Mischt man ein pulverförmiges organisches Material beliebiger Zusammensetzung mit einer solchen wäßrigen Zubereitung, formt dieses Gemisch zu Körnern und trocknet sie, so erhält man überraschenderweise Produkte mit einer glücklichen Kombination erwünschter Eigenschaften; insbesondere entwickeln die so erhaltenen Produkte bei der Handhabung wenig Staub und lassen sich in organischen, speziell in polymeren, Medien gut verteilen.

Gegenstand der Erfindung ist also die Verwendung von Polyisocyanat-Polyadditionsprodukten mit 2 bis 200, vorzugsweise 2 bis 150, insbesondere 5 bis 100 Milliäquivalenten (meq) Carboxylat-und/oder Sulfonatgruppen, bezogen auf 100 g Polyadditionsprodukt, in wäßriger Zubereitung zur Regulierung der Korngröße von organischem Material.

Wäßrige Lösungen und Dispersionen von Polyisocyanat-Polyadditionsprodukten, wie z.B. wäßrige Lösungen und wäßrige Dispersionen von Polyurethanen und von Polyurethan-Polyharnstoffen, sind bekannt. Ihre Herstellung wird beispielsweise beschrieben in: DE-PS 880 485, DE-PS 1 044 404, US-PS 3 036 998, DE-PS 1 178 586, DE-PS 1 134 946, DE-AS 1 237 306, DE-OS 1 595 602, US-PS 3 756 992, DE-OS 2 019 324, DE-OS 2 035 732, DE-OS 2 446 440, US-PS 3 479 310 und Angewandte Chemie 82, 35 (1970).

Polyisocyanat-Polyadditionsprodukte im Sinne der Erfindung sind Umsetzungsprodukte von Polyisocyanaten und Verbindungen mit gegenüber Isocyanaten reaktionsfähigen Wasserstoffatomen, wobei mindestens ein Teil dieser Verbindungen pro Molekül mindestens zwei reaktionsfähige Gruppen mit solchen Wasserstoffatomen besitzt. Beispiele für gegenüber Isocyanaten reaktionsfähige Wasserstoffatome sind die Wasserstoffatome von Hydroxyl-, Amino-, Thiol- und Carboxylgruppen.

Für die Herstellung der erfindungsgemäß zu verwendenden Polyisocyanat-Polyadditionsprodukte geeignete Ausgangs-Polyisocyanate a) sind beliebige organische Verbindungen mit mindestens zwei Isocyanatgruppen pro Molekül, wie sie z.B. bei W. Siefken, Liebigs Annalen der Chemie 562, 75 - 136, beschrieben sind. Vorzugsweise werden Diisocyanate $X(NCO)_2$ eingesetzt, wobei X einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methylcyclohexan (Isophorondiisocyanat), 4,4'-Diisocyanato-dicyclohexylmethan, 4,4'-Diisocyanato-dicyclohexylpropan-(2,2), 1,4-Diisocyanatobenzol, 2,4-Diisocyanatotoluol, 2,4-Diisocyanato-diphenylmethan, 2,6-Diisocyanatotoluol, 4,4'-Diisocyanato-diphenylmethan, p-Xylylen-diisocyanat sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanatgruppen, Urethangruppen und/oder Biuretgruppen aufweisende Polyisocyanate zu verwenden oder mitzuverwenden.

Bevorzugte Verbindungen mit gegenüber Isocyanaten reaktionsfähigen Wasserstoffatomen für die Herstellung der erfindungsgemäß zu verwendenden Polyisocyanat-Polyadditionsprodukte sind b) organische Polyhydroxylverbindungen, insbesondere Polyesterpolyole, mit einem Molekulargewicht von 500 bis 6000.

Bei den Polyesterpolyolen b) handelt es sich vorzugsweise um Polyesterdiole. Die Carbonsäure-Komponente dieser Polyesterpolyole ist vorzugsweise eine Dicarbonsäurekomponente, und zwar insbesondere eine solche, die zu mindestens 50 Carboxyläquivalent-%, besonders bevorzugt ausschließlich, aus Adipinsäure besteht, während die entsprechende Polyolkomponente zu mindestens 50 Hydroxyläquivalent-%, besonders bevorzugt ausschließlich, aus Butandiol-1,4 und Hexandiol-1,6 besteht.

Zu den bevorzugten Polyesterpolyolen b) zählen auch die an sich bekannten Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Adipinsäure, Isophthalsäure, Trimellitsäure, Phthalsäureanhydrid, Tetra- und Hexahydrophthalsäureanhydrid, Tetrachlorphthalsäureanhydrid, Endomethylentetrahydrophthalsäureanhydrid, Glutarsäureanhydrid, Maleinsäure und ihr Anhydrid, Furmarsäure, di- und trimere Fettsäuren wie dimere Ölsäure, gegebenenfalls in Mischung mit monomeren Fettsäuren, Terephthalsäuredimethylester, Terephthalsäure-bis-ethylen-glykolester.

Als mehrwertige Alkohole kommen z.B. Ethylenglykol, Propandiol-1,2 und -1,3, Butandiol-1,4, -1,3 und -2,3, Hexandiol-1,6, Octandiol-1,8, Neopentylglykol, Cyclohexandimethanol, 1,4-Bis-(hydroxymethyl)-cyclohexan, 2-Methyl-1,3-propandiol, Glycerin, Trimethylolpropan, Hexantriol-1,2,6, Butantriol-1,2,4, ferner Diethylenglykol, Triethylenglykol, Tetraethylenglykol, Polyethylenglykol, Dipropylenglykol, Polypropylenglykol, Dibutylenglykol und Polybutylenglykol in Frage. Die Polyester können endständige Carboxylgruppen aufweisen. Auch Polyester aus Lactonen sind einsetzbar.

Auch Hydroxylgruppen aufweisende Polycarbonate kommen als Bestandteil der Polyesterpolyol-Komponente b) in Betracht, z.B. solche, die durch Umsetzung von Diolen wie Propandiol-1,3, Butandiol-1,4 und/oder Hexandiol-1,6, Diethylenglykol, Triethylenglykol, Tetraethylenglykol mit Kohlensäurederivaten, z.B. Diphenylcarbonat oder Phosgen, hergestellt werden können.

Für die Herstellung der erfindungsgemäß zu verwendenden Polyisocyanat-Polyadditionsprodukte geeignete Verbindungen mit gegenüber Isocyanaten reaktionsfähigen Wasserstoffatomen umfassen auch c) organische Polyhydroxylverbindungen und Aminoalkohole mit Molekulargewichten von 61 bis 499. Dazu zählen vorzugsweise 2- und/oder 3-wertige, insbesondere 2-wertige Polyhydroxylverbindungen und/oder Aminoalkohole des Molekulargewichtsbereichs 61 bis 499, vorzugsweise 61 bis 250. Es handelt sich bei diesen Aufbaukomponenten c) entweder um stickstofffreie, gegebenenfalls Ether- oder Estergruppen aufweisende Polyole oder um Aminoalkohole.

Zu den erstgenannten Vertretern der Aufbaukomponenten c) gehören beispielsweise einfache, mehrwertige Alkohole wie Ethylenglykol, Propandiol-1,2, Propandiol-1,3, Butandiol-1,4, Hexandiol-1,6, Trimethylolpropan und Glycerin.

Auch niedermolekulare Polyesterdiole wie z.B. Adipinsäure-bis-(hydroxyethyl)-ester oder niedermolekulare, Ethergruppen aufweisende Diole wie z.B. Diethylenglykol, Triethylenglykol, propoxyliertes Bis(4-hydroxyphenyl)-propan-2,2, Di-, Tri- oder Tetrapropylenglykol können als stickstofffreie Aufbaukomponente c) verwendet werden.

Zu den geeigneten Aminoalkoholen gehören beispielsweise Verbindungen wie Ethanolamin, Propanolamin, N-Methyldiethanolamin, N-Ethyl-diisopropanolamin oder N,N'-Bis(2-hydroxyethyl)-perhydropyrazin.

Für die Herstellung der erfindungsgemäß zu verwendenden Polyisocyanat-Polyadditionsprodukte geeignete Verbindungen mit gegenüber Isocyanaten reaktionsfähigen Wasserstoffatomen umfassen auch d) einwertige Polyetheralkohole des Molekulargewichtsbereichs 800 bis 10000, vorzugsweise 1000 bis 5000, die durch Alkoxylierung von einwertigen Startermolekülen wie beispielsweise Methanol, Ethanol, n-Butanol oder Phenol erhältlich sind, wobei als Alkoxylierungsmittel Ethylenoxid oder Gemische von Ethylenoxid mit anderen Alkylenoxiden, wie insbesondere Propylenoxid, eingesetzt werden.

Im Falle der Verwendung von Mischetheralkoholen enthalten diese jedoch vorzugsweise mindestens 40, insbesondere mindestens 65 Mol-% an Ethylenoxidresten, bezogen auf Alkylenoxidreste. Die gegebenenfalls erfolgende Mitverwendung von derartigen Aufbaukomponenten d) bewirkt, daß in die Polyadditionsprodukte endständig hydrophile, innerhalb von Polyetherketten plazierte Ethylenoxid-Einheiten eingebaut werden.

Die Umsetzung der Polyisocyanate a) mit den Aufbaukomponenten b) und - soweit vorhanden - c) und d) erfolgt in der Regel vor der Zugabe der Aufbaukomponente e) und ergibt ein im folgenden "NCO-Prepolymer" genanntes Reaktionsprodukt.

Für die Herstellung der erfindungsgemäß zu verwendenden Polyisocyanat-Polyadditionsprodukte geeignete Verbindungen mit gegenüber Isocyanaten reaktionsfähigen Wasserstoffatomen umfassen auch e) Mono- und Diaminoverbindungen. Der Begriff "Diamino-Verbindung" bzw. "Diamine" soll auch Hydrazin und Hydrazinderivate umfassen. Es können Diaminoverbindungen, deren Molekulargewichtsbereich 32 bis 500, vorzugsweise 60 bis 300 beträgt, mit primären und/oder sekundären Aminogruppen eingesetzt werden.

Beispielsweise sind dies Ethylendiamin, Hexamethylendiamin, Isophorondiamin, 2,4-Diaminotoluol, 4,4′-Diaminodiphenylmethan, N,N′-Dimethylethylendiamin, Bis(4-aminocyclohexyl)-methan, Piperazin, 2,5-Dimethyl-piperazin, 1,4-Diaminocyclohexan, 1,2-Diamino-propan, Hydrazin-(hydrat), Diaminosulfonate der in der CA-PS 928 323 beschriebenen Art, oder das Natriumsalz der N-(2-Aminoethyl )-2-aminopropionsäure.

Als Monoaminoverbindungen sind primäre und/oder sekundäre Aminoverbindungen einsetzbar, deren Molekulargewicht 17 bis 500, vorzugsweise 17 bis 300 beträgt. Beispielsweise sind dies Dibutylamin, N-Methylethanolamin, Diethanolamin, 3-Amino-1-propanol, 2-(3-Aminopropyl)-methylamino-ethanol, 2-Amino-1-hydroxymethyl-1,3-propandiol oder Methylamino- bzw. Aminoessigsäure und ihre Salze oder Ammoniak.

Besonders bevorzugt werden solche primären und/oder sekundären Aminoverbindungen eingesetzt, die weitere, jedoch nicht aminische, gegenüber Isocyanaten reaktionsfähige Gruppen enthalten. Dies sind zum Beispiel Ethanolamin, Diethanolamin oder 2-Amino-2-hydroxymethyl-1,3-propandiol.

Die aminischen Aufbaukomponenten e) können auch in blockierter Form, d.h. in Form der entsprechenden Ketimine (DE-OS 2 725 589), Ketazine (DE-OS 2 811 148, US-PS 4 269 748) oder Aminsalze (US-PS 4 292 226) zum Einsatz gelangen.

Auch Oxazolidine, wie sie beispielsweise gemäß DE-OS 2 732 131 bzw. US-PS 4 192 937 zum Einsatz gelangen, stellen verkappte Amine dar, die in Analogie zu den genannten Veröffentlichungen zur Kettenverlängerung der NCO-Prepolymeren eingesetzt werden können. Bei der Verwendung derartiger verkappter Amine werden diese im allgemeinen mit den NCO-Prepolymeren in Abwesenheit von Wasser vermischt und diese Mischung anschließend mit dem Dispersionswasser oder einem Teil des Dispersionswassers vermischt, so daß hydrolytisch die entsprechenden Amine freigesetzt werden.

Nach einer bevorzugten Ausführungsform werden die erfindungsgemäß zu verwendenden Polyisocyanat-Polyadditionsprodukte aus

a) Polyisocyanaten,

b) organischen Polyhydroxylverbindungen des Molekulargewichtsbereiches 500 bis 6000, bevorzugt Polyesterpolyole, gegebenenfalls

c) organischen Polyhydroxylverbindungen und/oder Aminoalkoholen des Molekulargewichtsbereichs 61 bis 499, gegebenenfalls

d) innerhalb von Polyetherketten eingebaute Ethylenoxideinheiten aufweisenden einwertigen Alkoholen des Molekulargewichtsbereichs 800 bis 10000 und

e) aminischen und/oder hydrazinischen Kettenverlängerungsmitteln

hergestellt, wobei vorzugsweise die Komponente e) primäre und/oder sekundäre Monoaminoverbindungen, gegebenenfalls in Abmischung mit primären und/oder sekundären Diaminoverbindungen enthält.

Bei Einsatz einer Abmischung aus Mono- und Diaminoverbindungen wird so verfahren, daß das Äquivalentverhältnis von NCO-reaktiven Aminogruppen in der Monoaminoverbindung zu NCO-reaktiven Aminogruppen in der Diaminoverbindung zwischen 20:1 und 1:20, bevorzugt zwischen 10:1 und 1:10, besonders bevorzugt zwischen 5:1 und 1:8 und ganz besonders bevorzugt zwischen 1:1 und 1:4 liegt.

Nach dieser bevorzugten Ausführungsform wird die Komponente c) in einer Menge von 0 bis 75 Hydroxyl- bzw. Aminäquivalent-%, bezogen auf die Summe der Komponenten b) und c), verwendet.

Komponente d) kann in solchen Mengen eingebaut werden, daß die erfindungsgemäß zu verwendenden Polyisocyanat/Polyadditionsprodukte bis zu 25 Gew.-%, bezogen auf Polyadditionsprodukt, in Polyethergruppen vorliegende Ethylenoxideinheiten besitzen (vgl. US-PS 3 905 929 und 4 190 566).

Bevorzugt werden Mono- und Diaminoverbindung e) in einer Menge eingesetzt, daß das Äquivalentverhältnis von NCO-Gruppen im NCO-Prepolymer zu NCO-reaktiven Aminogruppen zwischen 1 : 1 und 2,5 : 1, besonders bevorzugt zwischen 1 : 1 und 1 : 1,5 und ganz besonders bevorzugt zwischen 1,05 : 1 und 1,4 : 1 und von NCO-Gruppen im NCO-Prepolymer zur Gesamtmenge der in e) gegenüber Isocyanaten aktiven Wasserstoffe zwischen 0,5 : 1 und 0,98 : 1, besonders bevorzugt zwischen 0,6 : 1 und 0,9 : 1 liegt.

Der Einbau der ionischen Zentren gelingt in an sich bekannter Weise durch Mitverwendung von Aufbaukomponenten mit ionischen Gruppen (Carboxylat- und/oder Sulfonatgruppen) oder mit potentiellen ionischen Gruppen (Carboxyl- und/oder Sulfonsäuregruppen). Im Falle der Verwendung von Verbindungen mit potentiellen ionischen Gruppen der genannten Art kann die (zumindest teilweise) Überführung der potentiellen ionischen Gruppen in die entsprechenden ionischen Gruppe vor- oder gleichzeitig mit der Vermischung der Polyadditionsprodukte mit dem Wasser der Herstellung der Lösung bzw. Dispersion, beispielsweise mittels tertiärer Amine, wie z.B. Triethylamin, oder mittels anorganischer Basen, wie z.B. Natronlauge, erfolgen.

Zu den anionischen bzw. potentiell anionischen Aufbaukomponenten gehören beispielsweise Sulfonatgruppen aufweisende aliphatische Diole gemäß DE-OS 2 446 440 oder DE-OS 2 437 218, Carboxylatgruppen oder in Carboxylatgruppen überführbare Carboxylgruppen aufweisende Diole und/oder Diaminsulfonate der in der CA-PS 928 323 beschriebenen Art, wie z.B. Natriumsalz der N-(2-Aminoethyl)-2-aminoethansulfonsäure, die Dimethylolpropionsäure oder deren Salze, beispielsweise das entsprechende Triethylammoniumsalz oder das Natriumsalz der N-(2-Aminoethyl)-3-aminopropionsäure.

Es ist weitgehend unerheblich, ob die ionischen Gruppen in den erfindungsgemäß zu verwendenden Polyisocyanat-Polyadditionsprodukten Bestandteile der von den Aufbaukomponenten b), c) und/oder e) herrührenden Gruppen sind.

Die Gesamtmenge an hydrophilen Zentren (anionische Gruppen plus gegebenenfalls Polyetherketten mit eingebauten Polyethylenoxideinheiten) wird bei der Herstellung der Polyadditionsprodukte stets so bemessen, daß die Löslichkeit bzw. Dispergierbarkeit der Polyadditionsprodukte in Wasser gewährleistet ist.

Als Hilfsmittel für eine bessere Dispergierung der erfindungsgemäß zu verwendenden Polyisocyanat-Polyadditionsprodukte in der wäßrigen Phase und/oder für eine möglichst gute Verteilung der wäßrigen Zubereitung (enthaltend diese Polyadditionsprodukte) in dem (eventuell wasserfeuchten) Pulver, für das sie als Bindemittel dienen sollen, können oberflächenaktive Mittel (Emulgatoren) verwendet werden. Die Mengen betragen im allgemeinen 0,01 bis 10, vorzugsweise 0,01 bis 5, insbesondere 0,01 bis 2 Gew-%, bezogen auf Polyadditionsprodukt, oder 0,1 bis 15 Gew-%, bezogen auf Pulver, für das die Polyadditionsprodukte als Bindemittel dienen sollen.

Bevorzugte oberflächenaktive Mittel umfassen anionische und nichtionische oberflächenaktive Mittel, wie sie z.B. in Ullmanns Encyclopädie der technischen Chemie, 4. Aufl., Bd. 10, 449 - 461, Verlag Chemie, Weinheim 1975 beschrieben wird.

Bevorzugte anionische oberflächenaktive Mittel sind beispielsweise Fettsäureseifen, Natrium-n-alkylsulfate wie Natriumlaurylalkoholsulfat, Natriumpolyoxyethylenalkylethersulfate, Alkylsulfonate, Natriumnaphthalinsulfonat/Formaldehyd-Kondensate und Alkylphosphate.

Bevorzugte nichtionische oberflächenaktive Mittel sind beispielsweise Polyoxyethylenlaurylether und -laurat, Polyoxyethylenstearylether und -stearat, Polyoxyethylenoleinether und -oleat, Polyoxyethylenoctyl- und -nonylphenylether. Die verwendeten nichtionischen oberflächenaktiven Mittel weisen im allgemeinen im Mittel 3 bis 50 Polyoxyethyleneinheiten pro Molekül auf.

Als Hilfsmittel für eine bessere Bindemittelwirkung der erfindungsgemäß zu verwendenden Polyisocyanat-Polyadditionsprodukte können die wäßrigen Zubereitungen auch Weichmacher enthalten. Bevorzugte Weichmacher für diesen Zweck umfassen Phthalsäureester, wie z.B. Dimethyl-, Diethyl-, Dibutyl-, Dioctyl-, Benzylbutyl-, Dicyclohexylphthalat, Ester aus Phthalsäure und Ethylenglykol, Mischester aus Phthal- und Adipinsäure mit Ethylenglykol und Diethylenglykol, Adipinsäureester, wie z.B. Dibutyl-, Benzylbutyl- und Benzyloctyladipinat, Phosphorsäureester, wie z.B. Trikresyl-, Triphenyl-, Diphenylkresyl- und Trichlorethylphosphat, Fettsäurealkylester, epoxidierte Fettsäureester, Sulfonsäureester, vorzugsweise aliphatische Sulfonsäureester, Triglykolacetate, Glycerinacetate, Benzolsulfonsäure-N-methylamid, p-Hydroxybenzoesäureoctylester, Polyole, wie z.B. Ethylenglykol, Diethylenglykol, in Wasser dispergierbare, polymere Weichmacher, wie z.B. Polyvinylethylether. Die Weichmacher können in Mengen von 0,01 bis 10, vorzugsweise 0,05 bis 8, insbesondere 0,1 bis 5 Gew.-%, bezogen auf Pulver, für das die Polyadditionsprodukte als Bindemittel dienen sollen, verwendet werden.

Bei der Herstellung der wäßrigen Zubereitung läßt sich die Fließfähigkeit dieser Zubereitung ohne weiteres durch die Wahl der Wassermenge regeln. Im allgemeinen wird die Wassermenge so bemessen, daß die wäßrigen Zubereitungen 10 bis 60, vorzugsweise 20 bis 50 Gew.-% Polyadditionsprodukt enthalten.

Die wäßrigen Zubereitungen können weitere Hilfsmittel und Zusätze enthalten, wie sie beispielsweise in der US-PS 3 479 310, Sp. 8, Z. 40 bis Sp. 9, Z. 10 beschrieben sind.

Für die Qualität der wäßrigen Zubereitung ist eine möglichst homogene Verteilung der einzelnen Komponenten in der wäßrigen Phase wichtig. Dies kann ohne Schwierigkeiten dadurch erreicht werden, daß man eine Mischeinrichtung, die mit hoher Geschwindigkeit betrieben wird und ein hohes Drehmoment ausübt, wie eine Homogenisierungseinrichtung, einen Homogenisiermischer oder dergleichen, verwendet.

Zu den organischen Materialien, zu deren Korngrößenregulierung die erfindungsgemäß zu verwendenden Polyisocyanat-Polyadditionsprodukte eingesetzt werden können, zählen Chemikalien jeglicher Art, vorzugsweise Hilfsmittel für Polymere, insbesondere Hilfsmittel für Thermoplaste und Hilfsmittel für Kautschuke. Als solche kommen beispielsweise in Frage: Alterungsschutzmittel, Treibmittel, Mastiziermittel, Regeneriermittel und insbesondere Vulkanisationschemikalien, wie sie z.B. im Bayer-Handbuch für die Gummi-Industrie, Leverkusen 1971, beschrieben sind. Zu den Vulkanisationschemikalien gehören Vulkanisationsbeschleuniger wie Mercapto-, Sulfenamid-, Guanidin-, Thiuram-, Dithiocarbamat-, Amin- und Thioharnstoff-Beschleuniger.

Besonders bevorzugte Vulkanisationsbeschleuniger sind:
2-Mercaptobenzothiazol,
Dibenzothiazyl-disulfid,
Benzothiazyl-2-cyclohexylsulfenamid (CBS),
Benzothiazyl-2-tert.-butylsulfenamid (TBBS),
N-Morpholinothio-2-benzothiazol (MBS),
Benzothiazyl-2-diisopropylsulfenamid (DIBS),
Benzothiazyl-2-tert.-amylsulfenamid (AMZ),
Benzothiazyl-dicyclohexylsulfenamid (DCBS) und
Morpholino-thiocarbonyl-sulfenmorpholid (OTOS).

Die wäßrigen Zubereitungen werden in solchen Mengen eingesetzt, daß - bezogen auf pulverförmiges Material (also z.B. Vulkanisationsbeschleuniger) - 0,05 bis 25, vorzugsweise 0,05 bis 15, insbesondere 0,05 bis 5 Gew.-% Polyadditionsprodukt in der resultierenden Masse enthalten sind.

Zur Herstellung von Körnern werden die pulverförmigen organischen Materialien mit der Polyisocyanat-Polyadditionsprodukt-enthaltenden wäßrigen Zubereitung gemischt, und die Mischung wird geformt, z.B. mittels Extruder, Flachmatrizenpresse, Ringmatrizenpresse, Strangpresse oder Granulierteller.

Die Korngröße kann in weiten Bereichen schwanken; sie hängt u.a. von der Art des organischen Materials und vom Einsatzzweck ab. Oft beträgt sie jedoch 1 bis 6 mm.

Nach der Formung können die kornförmigen Massen, gegebenenfalls unter vermindertem Druck, getrocknet werden.

Die in den nachfolgenden Beispielen genannten Teile sind Gewichtsteile; Prozentangaben beziehen sich auf das Gewicht.

Beispiele

Es wurde ein Granulat (Zylinder einer Länge von 5 bis 10 mm und eines Durchmessers von 2 mm) hergestellt. An den erhaltenen Granulatkörperchen wurden die Bruchkraft und der Staubanteil im Falltest bestimmt.

Die Prüfmethoden zur Beurteilung der Granulate sind bei P. Walzel, Chem.-Ing.-Tech. 60 (1988) 722 - 724 Mikrofiche MS 1699/88 detailliert beschrieben.

$F_m$ = mittlere Bruchkraft von 100 Granulen,
$F_{max}$: = Maximum der Bruchkraft (b. 100 Granulen).

Falltest = Staubanteil nach 100 Fallversuchen aus 1 m Fallhöhe, der mit einem Sieb mit 0,63 mm Maschenweite nach dem Versuch von den Granulen abgetrennt werden kann.

Vergleich

100 g N-Cyclohexyl-2-benzothiazolsulfenamid (CAS-RN 95-33-0, ® VULKACIT CZ der Bayer AG) werden feucht (Wassergehalt: 20 - 25 %) ohne den Zusatz von Granulierhilfsmittel auf einer Kollerpresse granuliert. Nach dem Trocknen im Umlufttrockenschrank zeigen die erhaltenen Granulen folgende Eigenschaften:

$F_m$ = 0,64 N
$F_{max}$ = 1,80 N
Falltest = 44,7 % Staubanteil

Beispiel 1

360,0 g Adipinsäure/Butandiol-Polyester (OH-Zahl 50) (PE),
23,35 g Hexamethylendiisocyanat (H),
15,3 g Isophorondiisocyanat (IPDI),
800 g Aceton,
12,9 g Natriumsalz der N-(2-Aminoethyl)-2-amino-ethansulfonsäure (45prozentig in Wasser) (AAS-Salz),
2,1 g Diethanolamin,
565 g Wasser

Der Polyester (PE) wird 30 Minuten bei 120°C im Vakuum unter Rühren entwässert und auf 80°C abgekühlt. Nach Zugabe von H und IPDI wird bei 80°C so lange gerührt, bis ein konstanter NCO-Wert von 0,9 bis 1,01 % erreicht ist. Langsam wird Aceton zugegeben, wobei die Temperatur bei 50°C gehalten wird. In die homogene acetonische Lösung wird eine Lösung von AAS-Salz und Diethanolamin in 50 g Wasser bei 50°C eingerührt. Nach 7 Minuten wird mit Wasser dispergiert und anschließend sofort das Aceton abdestilliert.

Man erhält eine feinteilige Dispersion mit einem Feststoffgehalt von 40,2 % und einem pH-Wert von 7,9.

Es werden

100 ,00 g N-Cyclohexyl-2-benzothiazolsulfenamid (CAS-RN 95-33-0, ®VULKACIT CZ der Bayer AG),

28,2 g Wasser,

0,45 g obiger wäßriger Dispersion,

0,58 g Dioctylphthalat und

0,05 g Polyether aus Laurylalkohol und 5 Mol Ethylenoxid (Emulgator L5 der Bayer AG)

mit einem Schaufelmischer gemischt, mit einer Kollerpresse granuliert und getrocknet.

$F_m$ = 1,03 N

$F_{max}$ = 2,98 N

Falltest = 25,6 % Staubanteil

Beispiel 2

Es werden

100,00 g Bis-benzothiazoldisulfid (CAS-RN 120-78-5, ®VULKACIT DM der Bayer AG),

42,9 g Wasser,

2,53 g obiger wäßriger Dispersion und

0,20 g Dioctylphthalat

nacheinander mit einem Schaufelmischer gemischt, mit einer Kollerpresse granuliert und getrocknet.

$F_m$ = 0,78 N

$F_{max}$ = 2,19 N

Falltest = 22,5 % Staubanteil

**Patentansprüche**

1. Verwendung von Polyisocyanat-Polyadditionsprodukten mit 2 bis 200 meq Carboxylat- und/oder Sulfonatgruppen, bezogen auf 100 g Polyadditionsprodukt, in wäßriger Zubereitung zur Regulierung der Korngröße von organischem Material.

2. Verwendung nach Anspruch 1 von Polyadditionsprodukten mit 2 bis 150 meq Carboxylat- und/oder Sulfonatgruppen, bezogen auf 100 g Polyadditionsprodukt.

3. Verwendung nach Ansprüchen 1 und 2 von Polyadditionsprodukten mit 5 bis 100 meq Carboxylat- und/oder Sulfonatgruppen, bezogen auf 100 g Polyadditionsprodukt.

4. Verwendung nach Ansprüchen 1 bis 3, wobei das organische Material ein Hilfsmittel für Thermoplaste oder Kautschuke ist.

5. Verwendung nach Ansprüchen 1 bis 4, wobei das organische Material ein Mittel für die Kautschukvulkanisation ist.

6. Verwendung nach Ansprüchen 1 bis 5, wobei das organische Material ein Vulkanisationsbeschleuniger ist.

**Claims**

1. The use of polyisocyanate polyaddition products containing 2 to 200 meq carboxylate and/or sulfonate groups, based on 100 g polyaddition product, in the form of an aqueous preparation for controlling the particle size of organic material.

2. The use claimed in claim 1 of polyaddition products containing 2 to 150 meq carboxylate and/or sulfonate groups, based on 100 g polyaddition product.

3. The use claimed in claims 1 and 2 of polyaddition products containing 5 to 100 meq carboxylate and/or sulfonate groups, based on 100 g polyaddition product.

4. The use claimed in claims 1 to 3, the organic material being an auxiliary for thermoplastics or rubbers.

5. The use claimed in claims 1 to 4, the organic material being an agent for the vulcanization of rubber.

6. The use claimed in claims 1 to 5, the organic material being a vulcanization accelerator.

**Revendications**

1. Utilisation de produits de polyaddition de polyisocyanates contenant de 2 à 200 méq. de groupes carboxylate et/ou sulfonate pour 100 g du produit de polyaddition, à l'état de composition aqueuse, pour le réglage de la dimension de grain de matières organiques.

2. Utilisation selon la revendication 1 de produits de polyaddition contenant de 2 à 150 méq. de groupes carboxylate et/ou sulfonate pour 100 g du produit de polyaddition.

3. Utilisation selon les revendications 1 et 2 de produits de polyaddition contenant de 5 à 100 méq. de groupes carboxylate et/ou sulfonate pour 100 g du produit de polyaddition.

4. Utilisation selon les revendications 1 à 3, dans laquelle la matière organique est un produit auxiliaire pour résines thermoplastiques ou caoutchoucs.

5. Utilisation selon les revendications 1 à 4, dans laquelle la matière organique est un produit pour la vulcanisation du caoutchouc.

6. Utilisation selon les revendications 1 à 5, dans laquelle la matière organique est un accélérateur de vulcanisation.